# EUROPÄISCHE PATENTSCHRIFT

(11) **EP 2 287 257 B1**
(45) Veröffentlichungstag und Bekanntmachung des Hinweises auf die Patenterteilung: **22.04.2015**
(21) Anmeldenummer: 10171634.8
(22) Anmeldetag: 02.08.2010
(51) Int. Cl.: C09D 11/38, D21H 21/48, B42D 25/378

(54) **Substanz zur Markierung der Echtheit von Geldscheinen, Wertpapieren und Unterlagen und Verfahren zur Herstellung derselben**
Substance for marking the authenticity of banknotes, securities and documents and method for producing same
Substance destinée au marquage de l'authenticité de billets de banque, de papiers de valeur et de documents et son procédé de fabrication

(30) Priorität: 07.08.2009 RU 2009130222
(43) Veröffentlichungstag der Anmeldung: 23.02.2011
(73) Patentinhaber: OOO "Novye Energeticheskie Tehnologii", 107045 Moscow (RU); Golsen Limited, 3041 Limassol (CY)
(72) Erfinder: Vasilyev, Vitaly, Troitsk (RU); Velichansky, Vladimir, Moscow (RU); Dementeva, Olga, Moscow (RU); Zibrov, Sergey, Troitsk (RU); Rudoi, Viktor, Moscow (RU)
(74) Vertreter: Jeck, Anton

(56) Entgegenhaltungen:
- EP-A1- 2 163 392
- WO-A1-2004/009057
- JP-A- 2008 239 659

## Beschreibung

Die Erfindung betrifft eine Substanz zur Markierung der Echtheit von Geldscheinen, Wertpapieren und Unterlagen nach dem Oberbegriff des Anspruchs 1 und ein Verfahren zur Herstellung derselben nach dem Oberbegriff des Anspruchs 2.

Die Erfindung ist für den Schutz von Geldscheinen, Wertpapieren und Unterlagen einsetzbar. Sie kann bei der Herstellung der Markierungen angewendet werden, um damit die genannten Gegenstände zur Bestätigung ihrer Echtheit zu versehen.

Aus [1] ist eine Substanz zum Auftragen der genannten Markierungen bekannt. Es handelt sich dabei um eine antistokessche Verbindung. Sie besteht aus einigen Seltenerdmetallen, die in die Zusammensetzung der Farbe, des Klebers, der Tinte usw. eingeschlossen sind. Der Mangel dieser bekannten Substanz besteht darin, dass es ziemlich einfach ist, die Spektren ihrer Lumineszenz mittels anderer Stoffe wiederzugeben. Darüber hinaus ist es relativ einfach möglich, die eigentliche bekannte Substanz nachzubilden.

Aus [2] ist eine andere Substanz zum Auftragen der genannten Markierungen bekannt, die eine Aufschwemmung darstellt. Sie weist Nanokristalle eines Diamanten mit Stickstoff-Fehistellen-Zentren (NV-Zentren) und einen flüssigen Träger auf. Diese Substanz liegt ihrer Zusammensetzung nach der vorgeschlagenen Substanz am nächsten und ist damit als Prototyp der vorgeschlagenen Erfindung gewählt. Der Mangel dieser genannten Substanz - des Prototyps - ist die Möglichkeit einer Aggregation (Zusammenhaften) der genannten Nanokristalle des Diamanten. Das verschlechtert die Qualität der genannten Markierungen. Ein weiterer Nachteil ist die Unbestimmtheit der Menge der oben erwähnten NV-Zentren in den genannten Nanokristallen. Dies kann ebenfalls die Qualität der Markierungen beeinträchtigen und dementsprechend die Sicherheit der Ergebnisse bei der Feststellung der Echtheit der oben genannten Gegenstände vermindern.

In [2] ist auch ein Verfahren zur Herstellung der Substanz zum Markieren der Echtheit von Geldscheinen, Wertpapieren und Unterlagen offenbart. Die Substanz enthält dabei Nanokristalle eines Diamanten mit aktiven NV-Zentren. Das Verfahren umfasst eine Bestrahlung der Diamanten mittels eines Elektronenbündels und eine nachfolgende Kühlung (Tempern). Der Mangel dieses bekannten Verfahrens - des Prototyps - ist eine unvollständige Reihenfolge der Verfahrensschritte bei der Herstellung der genannten Markierungssubstanz. Dies kann die Qualität der Markierungen beeinträchtigen und dementsprechend die Sicherheit der Ergebnisse bei der Feststellung der Echtheit der genannten Gegenstände verringern.

Es ist Aufgabe der Erfindung, bei der angemeldeten Substanz die oben beschriebenen Nachteile zu beseitigen und die Qualität der Markierungen der Echtheit der Geldscheine, Wertpapiere und Unterlagen und dementsprechend die Ergebnissicherheit bei der Feststellung der Echtheit der genannten Gegenstände zu erhöhen.

Weiter ist es Aufgabe der Erfindung, bei dem Verfahren die aufgezählten Nachteile zu beseitigen und die Qualität bei der Markierung der Echtheit von Geldscheinen, Wertpapieren und Unterlagen und folglich die Sicherheit der Ergebnisse bei der Feststellung der Echtheit der genannten Gegenstände zu erhöhen.

Die gestellten Aufgaben werden durch die Merkmale der Ansprüche 1 und 2 gelöst.

Die gesetzten Ziele in Bezug auf die Sicherheit werden auf folgende Weise erreicht: Die bekannte Substanz stellt eine Aufschwemmung dar, die Nanokristalle eines Diamanten mit Stickstoff-Fehlstellen-Zentren (NV-Zentren) und einen flüssigen Träger aufweist. Der flüssige Träger ist ein Lösungsmittel, z B. Propanol, welches mit einem Stabilisierungsmittel (Stabilisator) ergänzt ist. Der Stabilisator verhindert eine Aggregation (ein Zusammenhaften) der Nanokristalle des Diamanten. Als Stabilisator ist z. B. 0,5 - 5,0 % (Gew.) von Polyvinylpyrrolidon eingesetzt. Die oben genannten Nanokristalle des Diamanten sind 20 bis 200 nm große Nanokristalle von Naturdiamanten bzw. von Industriediamanten. Diese Diamanten sind einer solchen Modifikation ausgesetzt, dass sie eine bestimmte Konzentration der NV-Zentren im Bereich von 10¹⁸ bis 10¹⁹ Einheiten pro cm3 aufweisen. Dabei beträgt die Konzentration der Nanokristalle in der Aufschwemmung (3-10).10-4 glml. Die gesetzten Ziele in Bezug auf das Verfahren werden auf folgende Weise erreicht:Das bekannte Verfahren zur Herstellung einer Substanz zur Markierung der Echtheit von Geldscheinen, Wertpapieren und Unterlagen mit Nanokristallen eines Diamanten mit aktiven NV-Zentren umfasst solche Verfahrensschritte wie eine Bestrahlung der Diamanten mittels eines Elektronenbündels und eine nachfolgende Kühlung (Tempern). Unter Anwendung des bekannten Verfahrens [3] werden Natur- bzw. synthetische Diamantkristalle gewählt, bei denen die Konzentration der einzelnen Stickstoffatome im Diamantgitter der genannten Kristalle innerhalb von 10¹⁸ bis 3.10¹⁹ Einheiten pro cm³ liegt und deren typische Größe 100 - 1000 Mikrometer beträgt. Alle Fremdstoffe werden von der Oberfläche der genannten Kristalle entfernt. Die Bestrahlung erfolgt mittels Elektronen mit einer Energie von 1 - 3 MeV, mit einer Fluenz von 3·10¹⁸ bis 3.10¹⁹ Elektronen pro cm² und mit einer Flussdichte von max. 10¹³ Elektronen pro cm² pro Sekunde. Die Kühlung erfolgt unter Vakuum bzw. Inertgas (z. B. unter Argon) im Laufe von einigen Stunden bei einer Temperatur von 700 - 800 Grad Celsius. Danach werden die genannten Kristalle, z. B. mit Hilfe von Planeten-Kugelmühlen, zerkleinert. Die zerkleinerten Kristalle werden in einem Lösungsmittel, z. B. in Propanol, dispergiert. Das Lösungsmittel enthält dabei 0,5 - 5,0 % (Gew.) Stabilisierungsmittel (Stabilisator), z. B. Polyvinylpyrrolidon. Danach wird die hergestellte Aufschwemmung in einem Schleuderfeld abgestuft. Die Aufschwemmungsfraktion samt Nanoteilchen mit Größen von 20 bis 200 nm wird eingedampft bzw. verdünnt, bis eine Konzentration der Nanokristalle von (3-10)·10⁻⁴ g/ml erreicht wird, um diese danach verwenden zu können, wobei die Nanokristalle so modifiziert wurden, dass die Konzentration der darin vorhandenen NV-Zentren im Bereich von 10¹⁸ bis 10¹⁹ Einheiten pro cm3 liegt. Anstelle der Auswahl der Natur- bzw. synthetischen Diamantkristalle mit einer Konzentration einzelner Stickstoffatome im Diamantgitter der genannten Kristalle im Bereich von 10¹⁸ bis 3·10¹⁹ Einheiten pro cm³ und mit einer typischen Größe von 100 - 1000 µm werden synthetische Diamantkristalle hergestellt. Diese extra hergestellten synthetischen Diamantkristalle weisen eine Konzentration der einzelnen Stickstoffatome im Diamantgitter innerhalb des angegebenen Bereichs und die genannte typische Größe auf.

Die Feststellung der Echtheit von Geldscheinen, Wertpapieren und Unterlagen mit Markierungen, die Nanokristalle von Diamanten mit aktiven NV-Zentren enthalten, wird unter Anwendung des optischen Verfahrens [2] vorgenommen. Dieses Verfahren umfasst eine Erregung der Ebenen der NV-Zentren mittels einer elektromagnetischen Laserstrahlung mit einer Wellenlänge von 500 - 550 nm und eine Erfassung der Strahlung mit einer Wellenlänge von 630 - 800 nm bei einer Relaxation der Erregungszustände der genannten NV-Zentren. Deswegen muss die Substanz der beschriebenen Markierungen einige Anforderungen erfüllen, um die Anwendung der vorgeschlagenen Erfindung sicherzustellen.

Die Markierungssubstanz ist eine Aufschwemmung mit Nanokristallen eines Diamanten mit aktiven NV-Zentren. Ein Tropfen dieser Substanz wird auf das Wertpapier mit der Gesamtmasse der Nanokristalle aufgetragen. Die Gesamtmasse wird nach dem Umfang des Tropfens und nach der Konzentration der Nanokristalle in der Flüssigkeit, z. B. in Propanol, bestimmt. Die Zugabe einer organischen Substanz, z. B. Polyvinylpyrrolidon, verhindert eine Aggregation der Nanokristalle sowohl in der Flüssigkeit als auch bei ihrer Verdampfung auf dem Wertpapier. Die Bildung von Aggregaten und Clustern ist unerwünscht und zu vermeiden, da sonst dabei auf dem Wertpapier Lücken entstehen können (Stellen, die mit Nanokristallen nicht bedeckt sind). Diese Lücken zerstreuen einerseits die Laserstrahlung und vergrößern den Hintergrund, ohne zum Nutzsignal beizutragen. Andererseits deckt das Mehrschichtaggregat die unteren Schichten ab und verhindert somit ihre Erregung und zerstreut dazu noch die Fluoreszenz. Außerdem lassen sich die Aggregate visuell viel einfacher erkennen und viel leichter vom Träger während der Nutzung des Wertpapiers sowie infolge der Abnutzung ablösen.

Die Wahl der typischen Diamantkristallgrößen ist durch die Anforderungen an die Beständigkeit der Aufschwemmung und die Zuverlässigkeit bei ihrer Einlagerung in das Material des Wertpapiers bedingt. Die Kleingröße des Kristalls gegenüber der Wellenlänge im sichtbaren Bereich vergrößert die Fluoreszenzausbeute dank der Unterdrückung einer Totalreflexion und erschwert darüber hinaus die visuelle Beobachtung des einzelnen Kristalls. Die Verwendung der Kristalle mit typischen Abmessungen von unter 20 nm ist unzweckmäßig, denn die Nähe des NV-Zentrums zur Oberfläche führt zur Verminderung der Fluoreszenzausbeute und der Signalausbeute, welche die Echtheit des Gegenstands bestätigen.

Die Erfinder haben festgestellt, dass die Konzentration der NV-Zentren in den Nanokristallen innerhalb von 10¹⁸ - 10¹⁹ pro cm³ liegen muss, um eine erforderliche Stärke des genannten Signals bei einer Minimalmasse der Markierungssubstanz zu erreichen.

Somit stellen die beschriebene Zusammensetzung und die aufgezählten Kennwerte der Markierungssubstanz die Erhöhung der Qualität sicher und steigern somit die Sicherheit der Ergebnisse bei der Feststellung der Echtheit von Geldscheinen, Wertpapieren und Unterlagen, die mit den genannten Markierungen versehen sind.

Die genannte Zusammensetzung und die Kennwerte der Markierungssubstanz werden durch Anwendung des in dieser Erfindung vorgeschlagenen Verfahrens zur Herstellung dieser Substanz sichergestellt. Die einzelnen Verfahrensschritte sind:
1) Auswahl der Diamantkristalle mit einer typischen Größe von 100 bis 1000 µm, z. B. synthetische oder Naturdiamanten vom Typ lb. Diese Diamantkristalle haben eine hohe Stickstoffkonzentration innerhalb von 10¹⁸ bis 10¹⁹ pro cm³. Der genannte Größenbereich wurde auf der Grundlage gewählt, dass größere Kristalle die eine zu hohe Ungleichmäßigkeit der Fehlstellen-Konzentration bei ihrer nachfolgenden Elektronenbestrahlung bedingen. Darüber hinaus erhöhen sie den Energieaufwand bei ihrer Zerkleinerung und sind bedeutend teuerer. Die kleineren Kristalle können während der Bestrahlung zu einer Überhitzung führen, wodurch die Qualität der bestrahlten Kristalle wesentlich nachlässt und die Effizienz bei der Energienutzung des Elektronenbeschleunigers vermindert wird. Die genannte hohe Stickstoffkonzentration ist erforderlich, weil die Stickstoffatome dem aktiven NV-Zentrum angehören. Es sei betont, dass eine solche Konzentration bereits in den ausgewählten Ausgangs-diamantkristallen vorliegen muss, denn der Stickstoff dringt in den Kristallraum erst bei seiner Ausbildung in der Natur oder bei seiner Synthese ein. So ist z. B. die Einbettung der Stickstoffionen in die Diamantkristalle bei der Zubereitung der Markierungssubstanz unannehmbar, weil sie nur die an der Oberfläche liegende Schicht mit Stickstoff anreichert.
2) Da der zweite Teil des aktiven NV-Zentrums die Fehlstelle an der Stelle des Knotens des Diamantgitters ist, werden die ausgewählten Kristalle zur Erzeugung der Fehlstellen in der Elektronenschleuder mit einer Energie von 1 - 3 MeV bestrahlt. Die Erfinder haben festgestellt, dass die Bestrahlung der ausgewählten Kristalle mit einer Dosis von 3·10¹⁸ - 3·10¹⁹ Elektronen pro cm² eine solche Konzentration der Fehlstellen erzeugt, die wesentlich, sogar mehrfach, die genannte Konzentration der einzelnen Stickstoffatome überschreitet. Dies ist erforderlich, um die oben genannte Konzentration der aktiven NV-Zentren zu erzeugen. Dabei darf die Flussdichte max. 10¹³ Elektronen pro cm² pro Sekunde betragen, um eine Überhitzung der Kristalle zu vermeiden.
   Vor der Bestrahlung ist eine chemische Reinigung der Oberfläche erforderlich, um Verschmutzungen zu entfernen und ihr Einbrennen bei der Bestrahlung in der Elektronenschleuder und die Bildung von Absorptionsschichten und -zentren an der Oberfläche zu vermeiden.
3) Die bei der Bestrahlung gebildeten Fehlstellen sind nicht unbedingt in den an den Stickstoff angrenzenden Knoten angeordnet. Das NV-Zentrum entsteht nur, wenn der Stickstoff und die Fehlstelle in benachbarten Knoten des Diamantgitters liegen. Um ihre Annäherung zu erzielen, werden die Kristalle bei einer Temperatur von 700 - 800° C im Laufe von einigen Stunden getempert. Dies macht eine Diffusion der Fehlstellen im Kristall möglich. Während der Diffusion trifft ein Teil der Fehlstellen die Zwischengitteratome von Kohlenstoff (ihre Anzahl fällt mit der Anzahl der bei der Bestrahlung gebildeten Fehlstellen zusammen). Diese zwei Fehler vernichten einander beim Zusammentreffen. Nur einige der gebildeten Fehlstellen werden von den Stickstoffatomen mitgenommen und bilden dann das NV-Zentrum aus. Die Erfinder haben festgestellt, dass die Konzentration der Fehlstellen aus diesem Grund ca. um eine Größenordnung höher sein muss als die Konzentration der Stickstoffatome. Das Tempern muss unter Vakuum oder Inertgas (z. B. Argon) erfolgen, um eine Oxidation der Kristalle oder ihrer Oberflächenschicht zu vermeiden.
4) Wie bereits oben erwähnt, wird eine hohe Qualität der Echtheitsmarkierungen dadurch sichergestellt, dass bei ihrer Herstellung eine Substanz angewendet wird, die Diamantnanokristalle mit typischen Größen im Bereich von 20 - 200 nm enthält. Deswegen werden die Nanokristalle nach der Bestrahlung und dem Tempern zerkleinert. Wegen der zu hohen Härte der Kristalle werden sie nach einem Verfahren einer gegenseitigen Kollision, z. B. in Planeten-Kugelmühlen, zerkleinert.
5) Selbstverständlich wird bei den genannten Kollisionen der Kristalle eine breite Auswahl an typischen Größen der zerkleinerten Kristalle gebildet. Darunter gibt es eine Fraktion der Nanokristalle auch im erforderlichen Größenbereich von 20 - 200 nm.
6), 7) Um die genannte Fraktion auszusondern, wird das Fraktionieren (Abstufung), z. B. mittels eines Zentrifugierers, vorgenommen. Um jedoch das Fraktionieren nach dem erwähnten Verfahren ausführen zu können, muss als Ausgangsstoff die Aufschwemmung verwendet werden. Deswegen werden die zerkleinerten Kristalle in der Flüssigkeit zerstreut. Die Erfinder haben erfahrungsgemäß festgestellt, dass die für die Zubereitung der angemeldeten Markierungssubstanz am besten geeignete Flüssigkeit Propanol mit 0,5 - 5,0 % (Gew.) Stabilisierungsmittel (Stabilisator), z. B. Polyvinylpyrrolidon, ist.
8) Bei der Auswahl der Fraktion der Nanodiamanten mit den erforderlichen Dimensionen von 20 - 200 nm kann ihre Konzentration in der Aufschwemmung sich von der erforderlichen Konzentration ((3-10)·10⁻⁴ g/ml) etwas unterscheiden. Deswegen erweist sich in der Regel noch eine Konzentrationsanpassung mittels Eindampfens oder Verdünnung als nötig, bis die erforderliche Konzentration erreicht wird.

Im Falle einer gezielten Herstellung der synthetischen Diamantkristalle, um die genannte Markierungssubstanz zu erhalten, werden Kristalle mit den für eine Elektronenbestrahlung erforderlichen typischen Größen hergestellt. Dabei wird während der Züchtung dieser Kristalle der erforderliche Gehalt an (atomarem) Monostickstoff, z. B. mit Hilfe von Einbettung (Implantation), erreicht. In diesem Fall ist die Einbettung sicherlich zulässig, denn während der Kristallzüchtung werden die einzubettenden Stickstoffatome mehr oder weniger gleichmäßig im Kristallraum verteilt.

Somit ist die in dieser Erfindung vorgeschlagene Reihenfolge der Verfahrensschritte zur Herstellung der Substanz zum Markieren der Geldscheine, Wertpapiere und Unterlagen vollständig und stellt die Qualitätserhöhung der genannten Markierungen sicher. Dementsprechend steigert sie die Sicherheit der Ergebnisse bei der Feststellung der Echtheit der markierten Geldscheine, Wertpapiere und Unterlagen.

### Ausführungsbeispiel der vorgeschlagenen Substanz unter Anwendung des vorgeschlagenen Verfahrens

Die vorgeschlagene Substanz zur Markierung der Echtheit von Geldscheinen, Wertpapieren und Unterlagen stellt eine Aufschwemmung dar, die Diamantnanokristalle mit aktiven NV-Zentren aufweist. Die Markierungssubstanz wurde nach dem vorgeschlagenen Verfahren von der Firma OOO NET (Neue Energietechnologien) hergestellt. Die hergestellte Aufschwemmung mit einer Konzentration von 6 mg/ml wurde tropfenweise auf die Geldscheine aufgetragen. Der Umfang der Tropfen betrug 5 µl. Somit entstanden Markierungen mit einem Durchmesser von ca. 2 mm mit einem Gewicht von ca. 30 µg. Danach wurde eine Echtheitskontrolle der markierten Geldscheine durchgeführt. Zur Kontrolle wurde ein Prüfgerät verwendet, welches ebenfalls von der Fa. OOO NET (Neue Energietechnologien) entwickelt wurde. Dabei überschreitet das vom Prüfgerät ausgegebene Signal, welches die Echtheit der markierten Geldscheine bestätigt, das Eigenrauschen des Geräts mehrfach.

Somit wurde die Übereinstimmung der vorgeschlagenen Substanz und des vorgeschlagenen Verfahrens zu ihrer Herstellung mit den in den vorgeschlagenen Erfindungen der Fa. OOO NET (Neue Energietechnologien) gesetzten Zielen erfahrungsgemäß nachgewiesen.

### Quellennachweis:

[1] - Patent RU 2137612
[2] - Patent RU 2357866
[3] - Polymorphe Modifikationen von Kohlenstoff und Bornitrid. Moskau, "Metallurg", 1994.

## Patentansprüche

1. Substanz zur Markierung der Echtheit von Wertpapieren und Unterlagen, die eine Aufschwemmung mit Nanokristallen eines Diamanten mit Stickstoff-Fehlstellen-Zentren, i.e. NV-Zentren, und einem flüssigen Träger aufweist, **dadurch gekennzeichnet, dass** als flüssiger Träger ein Lösungsmittel, z.B. Propanol, verwendet ist, welches mit 0,5 - 5,0 % (Gew.) eines Stabilisators ergänzt ist, um eine Aggregation der genannten Diamantnanokristalle zu verhindern, wobei als Stabilisator z.B. Polyvinylpyrrolidon verwendet ist,
dass die Diamantnanokristalle 20 bis 200 nm große Nanokristalle von Naturdiamanten bzw. von Industriediamanten sind, die so modifiziert sind, dass eine Konzentration der darin vorhandenen NV-Zentren im Bereich von 10¹⁸ bis 10 ¹⁹ Einheiten pro cm3 liegt und dass dabei die Konzentration der Nanokristalle in der Aufschwemmung (3-10)·10⁻⁴ g/ml beträgt.

2. Verfahren zur Herstellung der Substanz zur Markierung der Echtheit von Geldscheinen, Wertpapieren und Unterlagen, weiche Nanokristalle eines Diamanten mit aktiven NV-Zentren aufweist, wobei das Verfahren folgende Schritte umfasst:
**dass** die Natur- oder die synthetischen Diamantkristalle unter Anwendung bekannter Verfahren ausgewählt werden, wobei die Konzentration der einzelnen Stickstoffatome im Diamantgitter der genannten Kristalle im Bereich von 10¹⁸ bis 3x10¹⁹ Einheiten pro cm3 liegt und wobei die typische Größe der genannten Kristalle 100 - 1000 µm beträgt,
**dass** alle Fremdstoffe von der Oberfläche der Kristalle entfernt werden,
dass die Bestrahlung der Diamanten mittels eines Elektronenbündels mit einer Energie von 1 - 3 MeV, einer Fluenz von 3x10¹⁸ bis 3x10¹⁹ Elektronen pro cm2 und einer Flussdichte von max. 10¹³ Elektronen pro cm2 pro Sekunde durchgeführt wird,
dass das nachfolgende Tempern unter Vakuum bzw. Inertgas, z.B. Argon, im Laufe von einigen Stunden bei einer Temperatur von 700 - 800 Grad Celsius durchgeführt wird,
**dass** die Kristalle danach, z. B. mit Hilfe von Planeten-Kugelmühlen, zerkleinert werden,
**dass** die zerkleinerten Kristalle in einem Lösungsmittel, z. B. in Propanol, zerstreut werden, welches 0,5 - 5,0 % (Gew.) Stabilisator, z. B. Polyvinylpyrrolidon, aufweist,
**dass** die hergestellte Aufschwemmung danach im Schleuderfeld fraktioniert wird und
dass die Aufschwemmungsfraktion mit den 20 bis 200 nm großen Nanokristallen eingedampft oder verdünnt wird, um eine erforderliche Konzentration der Nanokristalle von (3-10)-10⁻⁴ g/ml für die nachfolgende Nutzung zu erhalten, wobei die Nanokristalle so modifiziert sind, dass eine Konzentration der darin vorhandenen NV-Zentren im Bereich von 10¹⁸ bis 10¹⁹ Einheiten pro cm3 liegt.

3. Verfahren nach Anspruch 2,
**dadurch gekennzeichnet,**
**dass** synthetische Diamantkristalle hergestellt werden, bei denen die Konzentration der einzelnen Stickstoffatome im Diamantgitter innerhalb des angegebenen Bereichs liegt und die die genannte typische Größe aufweisen.

## Claims

1. A substance for marking the genuineness of securities and documents, which has a suspension with nanocrystals of a diamond with nitrogen-void centers, i.e., NV centers, and a liquid carrier medium, **characterized in that**
as the liquid carrier medium, a solvent, such as propanol, is used, which is supplemented with 0.5-5.0% (by weight) of a stabilizer, in order to prevent an aggregation of the aforementioned diamond nanocrystals, in which polyvinylpyrrolidone is used as the stabilizer;
that the diamond nanocrystals are nanocrystals, 20 to 200 nm in size, of natural diamonds or industrial diamonds, which are modified such that a concentration of the NV centers present in them is in the range from 10¹⁸ to 10¹⁹ units per cm3, and that the concentration of the nanocrystals in the suspension is (3-10)·10⁻⁴ g/ml.

2. A method for producing the substance for marking the genuineness of banknotes, securities and documents, which has nanocrystals of a diamond with active NV centers, the method including the following steps:
that the natural or synthetic diamond crystals are selected using known methods, and the concentration of the individual nitrogen atoms in the diamond lattice of said crystals is in the range from 10¹⁸ to 3x10¹⁹ units per cm3, and the typical size of said crystals is 100-1000 µm;
that all foreign substances are removed from the surface of the crystals;
that the irradiation of the diamonds is performed by means of an electron beam having an energy of 1-3 MeV, a fluence of 3x10¹⁸ to 3x10¹⁹ electrons per cm2 and a flux density of a maximum of 10¹³ electrons per cm2 per second;
that the ensuing tempering is performed at a vacuum or in inert gas, such as argon, in the course of several hours at a temperature of 700-800 degrees Celsius;
that the crystals, after that, are comminuted, for instance with the aid of planetary ball mills;
that the comminuted crystals are scattered in a solvent, such as propanol, which has 0.5-5.0% (by weight) of stabilizer, such as polyvinylpyrrolidone;
that the suspension produced is fractionated thereafter in the centrifuge field; and
that the suspension fraction having the nanocrystals that are 20 to 200 nm in size is evaporated or diluted, in order to obtain a requisite concentration of the nanocrystals of (3-10)-10⁻⁴ g/ml for the ensuing use, the nanocrystals being modified such that a concentration of the NV centers present in them is in the range from 10¹⁸ to 10¹⁹ units per cm3.

3. The method of claim 2,
**characterized in that**
synthetic diamond crystals are produced, in which the concentration of the individual nitrogen atoms in the diamond lattice is within the range recited, and which have the typical size recited.

## Revendications

1. Substance destinée au marquage de l'authenticité de titres et documents, qui comporte une suspension avec des nanocristaux d'un diamant à centres azote-lacune, c'est-à-dire centres NV, et un véhicule liquide, **caractérisée en ce qu'**on utilise comme véhicule liquide un solvant, le propanol par exemple, qui est complété avec 0,5 - 5,0 % (en poids) d'un stabilisant, afin d'empêcher une agrégation desdits nanocristaux de diamant, par exemple de la polyvinylpyrrolidone étant utilisée comme stabilisant,
que les nanocristaux de diamant sont des nanocristaux d'une taille de 20 à 200 nm de diamants naturels ou de diamants industriels, qui sont modifiés de manière qu'une concentration des centres NV présents dans ceux-ci se situe dans la plage de 10¹⁸ à 10¹⁹ unités par cm³ et que la concentration des nanocristaux dans la suspension vaut (3-10).10⁻⁴ g/ml.

2. Procédé pour la préparation de la substance destinée au marquage de l'authenticité de titres et documents, qui comporte des nanocristaux d'un diamant à centres NV actifs, le procédé comprenant les étapes suivantes :
choisir les cristaux de diamants naturels ou les cristaux de diamants synthétiques en utilisant des procédés connus, la concentration des atomes d'azote individuels dans le réseau cristallin desdits cristaux se situant dans la plage de 10¹⁸ à 3×10¹⁹ unités par cm³ et la taille caractéristique desdits cristaux valant de 100 à 1 000 µm,
éliminer toutes les substances étrangères de la surface des cristaux,
effectuer l'irradiation des diamants au moyen d'un faisceau d'électrons ayant une énergie de 1 - 3 MeV, une fluence de 3x10¹⁸ à 3x10¹⁹ électrons par cm² et une densité de flux d'au maximum 10¹³ électrons par cm² par seconde,
effectuer le traitement thermique subséquent sous vide ou gaz inerte (argon par exemple) en l'espace de quelques heures à une température de 700 - 800 degrés Celsius,
ensuite fragmenter les cristaux par exemple à l'aide de broyeurs à billes planétaires, disperser les cristaux fragmentés dans un solvant, dans du propanol par exemple, qui comporte 0,5 - 5,0 % (en poids) de stabilisant, polyvinylpyrrolidone par exemple, ensuite fractionner dans le champ de centrifugation la suspension produite et évaporer ou diluer la fraction de suspension avec les nanocristaux de taille de 20 à 200 nm, afin d'obtenir une concentration requise des nanocristaux de (3-10).10⁻⁴ g/ml pour l'utilisation ultérieure, les nanocristaux étant modifiés de manière qu'une concentration des centres NV présents dans ceux-ci se situe dans la plage de 10¹⁸ à 10¹⁹ unités par cm³.

3. Procédé selon la revendication 2,
**caractérisé en ce**
**qu'**on produit des cristaux de diamants synthétiques dans lesquels la concentration des atomes d'azote individuels dans le réseau cristallin se situe à l'intérieur de la plage indiquée et qui présentent ladite taille caractéristique.
